(19) **Europäisches Patentamt**
**European Patent Office**
**Office européen des brevets**

(11) **EP 3 620 359 B1**

(12) **EUROPEAN PATENT SPECIFICATION**

(45) Date of publication and mention
of the grant of the patent:
**27.01.2021 Bulletin 2021/04**

(51) Int Cl.:
**B62J 15/02** *(2006.01)* **B62J 21/00** *(2006.01)*
**B62J 17/06** *(2006.01)* **B62J 27/00** *(2020.01)*

(21) Application number: **19194654.0**

(22) Date of filing: **30.08.2019**

(54) **STRADDLE TYPE VEHICLE**

GRÄTSCHSITZFAHRZEUG

VÉHICULE DE TYPE À SELLE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **05.09.2018 JP 2018165659**

(43) Date of publication of application:
**11.03.2020 Bulletin 2020/11**

(73) Proprietor: **YAMAHA HATSUDOKI KABUSHIKI
KAISHA
Iwata-shi, Shizuoka 438-8501 (JP)**

(72) Inventor: **NAKAMURA, Satoshi
Iwata-shi, Shizuoka 438-8501 (JP)**

(74) Representative: **Grünecker Patent- und
Rechtsanwälte
PartG mbB
Leopoldstraße 4
80802 München (DE)**

(56) References cited:
**EP-A2- 2 433 855        WO-A1-2018/234935
US-A- 1 112 478**

**Description**

BACKGROUND OF THE INVENTION

1. Field of the Invention

This invention relates to a straddle type vehicle with a sari guard provided for a rear wheel.

2. Description of the Related Art

Document WO 2018/234935 A1 is a later published document and discloses discloses a two wheeled vehicle comprising a swing arm swingably pivoted to a frame assembly and having a rear wheel axle at one end supporting a rear wheel. A rear fender structure is disposed on the swing arm, enclosing at least a portion of a rear wheel circumferential surface, and said rear fender structure is fixed to the rear wheel axle. Additionally, a sari guard is mounted on the rear fender structure.

Document EP 2 433 855 A2, which could be seen as closest prior art, discloses a motorcycle with a rear wheel arranged below a seat frame portion. A rear arm supports the rear wheel in vertically moveable fashion. A rear fender connects to the rear arm. The rear fender is situated at least partly between the seat frame portion and the rear wheel in the vertical direction. A sari guard is arranged at least partly to the side of the rear wheel. The rear end of the rear fender is situated rearward from the upper end of the rear wheel. The lower portion of the sari guard connects to the rear arm. The upper portion of the sari guard connects to the rear fender.

In addition, a straddle type vehicle described in EP 2 433 855 A2 receives mud and the like splashed from a rear wheel by a rear fender by covering the rear wheel from above by the arcuate rear fender extending in a front-rear direction. This straddle type vehicle includes a sari guard lateral to the rear wheel to restrain mud and the like splashed laterally from the rear wheel from smearing the clothes of a passenger sitting on a tandem seat. This sari guard is mounted and supported on the rear fender or the like arranged thereabove.

SUMMARY OF THE INVENTION

In order to effectively exert the above function of the rear fender, it is advantageous that the position of the rear end of the rear fender is closer to the road surface, that is lower. However, if the rear fender is extended to lower the rear end of the rear fender, the rear fender is enlarged. Accordingly, a mechanism is considered in which the rear fender is divided into two front and rear parts and the rear fender part on a rear side is mounted on the rear end of a support arm extending rearward from a swing arm.

However, it has not been easy to adopt such a mechanism in straddle type vehicles with a sari guard. That is, if the lower end of the rear fender is simply extended downward, a part of the rear fender hanging down from the supporting arm becomes longer and the rear fender may collide with the rear wheel by being deflected due to an impact generated during travel on a bad road or vibration generated as the swing arm swings. Thus, the rear fender itself needs to be lowered. However, since the posture of the support arm supporting the rear fender approaches a horizontal posture as the rear fender is lowered, a load applied to a mounting part for mounting the support arm and the swing arm becomes large. Further, in the mechanism for dividing the rear fender into front and rear parts, it is difficult to mount and support the sari guard on the rear fender. Accordingly, if the sari guard is supported by the support arm, a load by the sari guard is also applied to the above mounting part. For these reasons, it has been difficult to mount the support arm and the swing arm while ensuring a sufficient stiffness for loads by the sari guard and the rear fender supported by the support arm.

This invention was developed in view of the above problem and aims to provide a technique enabling a support arm and a swing arm to be mounted while ensuring a sufficient stiffness for loads by a sari guard and a rear fender supported by the support arm.

Above problem is solved by a straddle type vehicle according to claim 1. Preferred embodiments are laid down in the dependent claims.

A straddle type vehicle according to the invention, comprises: a vehicle body frame; a swing arm supported on the vehicle body frame swingably in a vertical direction about a pivot of the vehicle body frame; a rear wheel rotatably supported on an axle provided in the swing arm; a support arm extending rearward from the swing arm; an upper mounting part configured to connect the support arm to the swing arm at an upper mounting location arranged above the axle provided in the swing arm; a lower mounting part configured to connect the support arm to the swing arm at a lower mounting location arranged below the axle provided in the swing arm; a first rear fender mounted on a rear end of the support arm and configured to cover a part of a peripheral surface of the rear wheel; and a sari guard arranged above the support arm and laterally to the rear wheel in a vehicle width direction and mounted on the support arm.

In the invention (straddle type vehicle) thus configured, the support arm and the swing arm are connected at the mounting locations (upper mounting location, lower mounting location) provided above and below the axle provided in the swing arm, the support arm supporting the sari guard and the rear fender. As a result, as described in detail later, a distance between the upper and lower mounting locations can be ensured while a distance between each of the upper and lower mounting locations and the rear fender is suppressed (reduced). As a result, the support arm and the swing arm can be mounted while a sufficient stiffness is ensured for loads by the sari guard and the rear fender supported by the support arm.

The straddle type vehicle may be configured so that a lower end of the first rear fender is located below a rotation center of the rear wheel in a vehicle side view. In such a configuration, since the first rear fender is arranged near a road surface, mud and the like splashed from the rear wheel can be more reliably received by the first rear fender. Further, according to the invention, the support arm and the swing arm can be mounted while the support arm ensures a sufficient stiffness for loads by the sari guard and the rear fender by ensuring a sufficient distance between the upper and lower mounting locations. Thus, the first rear fender can be firmly supported.

The straddle type vehicle may be configured so that an upper end of the first rear fender is located below an upper end of the sari guard in a vehicle side view. As just described, mud and the like splashed from the rear wheel can be reliably received by the first rear fender by arranging the first rear fender on a relative low side. Further, according to the invention, the support arm and the swing arm can be mounted while a sufficient stiffness is ensured for a load by the first rear fender arranged relatively low in this way. Thus, the first rear fender can be firmly supported.

The straddle type vehicle may be configured so that a front end of the sari guard is located in front of a front end of the upper mounting location and a front end of the lower mounting location in a vehicle side view. In such a configuration, since a center of gravity of the sari guard can be located relatively in front, loads applied to the upper and lower mounting locations from the first rear fender and the sari guard behind the upper and lower mounting locations can be suppressed.

The straddle type vehicle may be configured so that a center of the upper mounting location and a center of the lower mounting location are located behind a rotation center of the rear wheel in a vehicle side view. In such a configuration, a load applied from the first rear fender to each of the upper and lower mounting locations can be suppressed by suppressing a distance between each of the upper and lower mounting locations and the first rear fender.

The straddle type vehicle may further comprises a second rear fender arranged in front of the first rear fender at a distance from the first rear fender in a circumferential direction of the rear wheel and configured to cover a part of the peripheral surface of the rear wheel. In the case of separately providing the first rear fender and the second rear fender in this way, the rear fender (first rear fender) can be arranged near the road surface without enlarging the rear fender as compared to the case where the first and second rear fenders are integrally formed. Further, according to the invention, the first rear fender arranged near the road surface can be firmly supported as described above.

The straddle type vehicle may further comprises: a supporting member arranged above the swing arm and configured to support the second rear fender; and a front mounting part configured to connect the supporting member to the swing arm at a front mounting location above the axle provided in the swing arm and in front of the upper mounting location. In such a configuration, the front mounting location where the supporting member supporting the second rear fender and the swing arm are connected is located above the axle provided in the swing arm. Thus, the two mounting locations where the support arm and the swing arm are mounted need to be brought closer in order to arrange the two mounting locations above the swing arm while avoiding interference with the front mounting location. As a result, mounting stiffness is reduced. In contrast, since the support arm and the swing arm are connected at the mounting locations (upper mounting location, lower mounting location) provided above and below the axle provided in the swing arm according to the invention, mounting stiffness can be ensured.

The straddle type vehicle is configured so that the upper mounting part includes an upper projecting member mounted on the swing arm, projecting upward from the swing arm and overlapping the upper mounting location in a vehicle side view and an upper fastening member configured to fasten the upper projecting member and the support arm at the upper mounting location; and the lower mounting part includes a lower projecting member mounted on the swing arm, projecting downward from the swing arm and overlapping the lower mounting location in the vehicle side view and a lower fastening member configured to fasten the lower projecting member and the support arm at the lower mounting location. In such a configuration, the first rear fender, the sari guard and the support arm can be integrally removed by unfastening each of the upper and lower fastening members, and a disassembling operation associated with the maintenance or the like of the straddle type vehicle can be easily performed.

The straddle type vehicle may be configured so that the support arm includes a support stay to be mounted on the swing arm and two support rods extending rearward from the support stay; the support stay includes an upper part arranged above the axle provided in the swing arm to overlap the upper mounting location in a vehicle side view, a lower part arranged below the axle provided in the swing arm to overlap the lower mounting location in the vehicle side view, and a connecting part connecting the upper part and the lower part; a front end of each of the two support rods is mounted on the connecting part of the support stay; the first rear fender is mounted on a rear end of each of the two support rods; the upper mounting part connects the support arm to the swing arm at the upper mounting location by mounting the upper part of the support stay and the swing arm at the upper mounting location; and the lower mounting part connects the support arm to the swing arm at the lower mounting location by mounting the lower part of the support stay and the swing arm at the lower mounting location. As just described, the first rear fender can be firmly supported by the support arm including the support stay and the two support rods extending rearward from the support stay.

The straddle type vehicle may further comprises a sprocket mounted on the rear wheel; and a chain engaged with the sprocket.

The straddle type may be configure so that the upper mounting part overlaps the sprocket on a side inward of an outer periphery of the sprocket and contacts an inner side of the chain disengaged from the sprocket from below. In such a configuration, the fall of the chain disengaged from the sprocket can be suppressed by the upper mounting part.

The straddle type vehicle may further comprises a chain guard arranged below the chain, wherein: the chain guard is mounted on the support arm. In such a configuration, the chain guard can be firmly supported by the support arm mounted on the swing arm with high stiffness.

The straddle type vehicle may further comprises a tension applying part arranged behind a rear end of the swing arm and configured to adjust a tension of the chain, wherein: the support arm is provided with an opening formed in a range overlapping the tension applying part in a vehicle side view and a tool is insertable into the tension applying part through the opening. In such a configuration, the tool can be easily inserted into the tension applying part via the opening while the interference of the tool and the support arm is suppressed, and an operation of adjusting the tension of the chain can be easily performed.

ADVANTAGEOUS EFFECTS OF INVENTION

As described above, according to the invention, the support arm and the swing arm can be mounted while a sufficient stiffness is ensured for loads by the sari guard and the rear fender supported by the support arm.

The above and further objects and novel features of the invention will more fully appear from the following detailed description when the same is read in connection with the accompanying drawing. It is to be expressly understood, however, that the drawing is for purpose of illustration only and is not intended as a definition of the limits of the invention.

BRIEF DESCRIPTION OF THE DRAWINGS

FIG. 1 is a left side view showing a motorcycle corresponding to an example of a straddle type vehicle according to the invention.
FIG. 2 is a back view showing the motorcycle of FIG. 1.
FIG. 3 is a left side view partially showing the configuration of and around the rear wheel.
FIG. 4 is a perspective view partially showing the configuration around the rear wheel from above.
FIG. 5 is a perspective view partially showing the configuration around the rear wheel from the front.
FIG. 6 is a left side view showing the configuration around the rear wheel partially in a transparent manner.
FIG. 7 is a diagram schematically showing positional relationships of the mounting locations of the swing arm and the support arm and the first rear fender.
FIG. 8 is a side view schematically showing a chain fall suppressing function of the upper projecting member.

DETAILED DESCRIPTION OF THE PREFFERED EMBODIMENTS

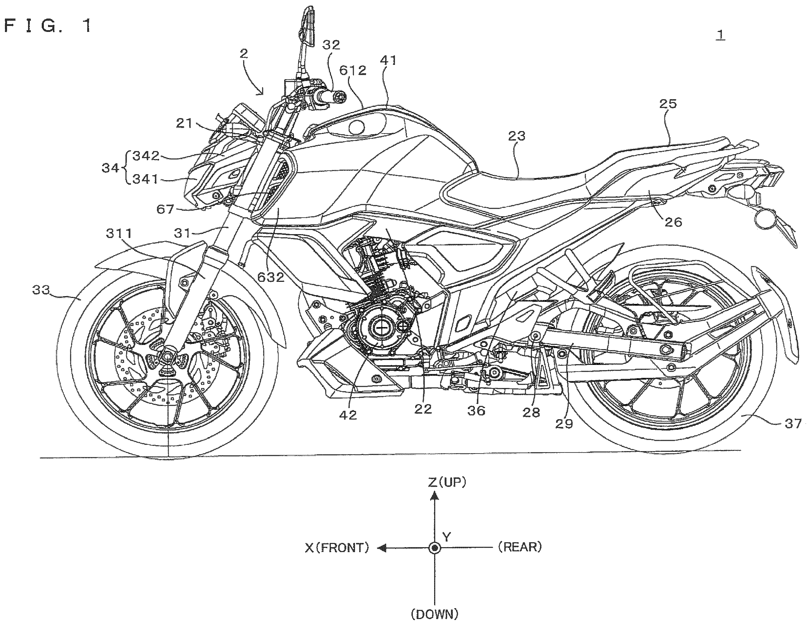

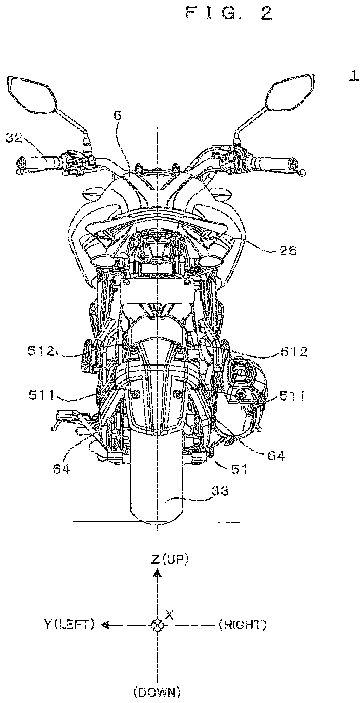

FIG. 1 is a left side view showing a motorcycle corresponding to an example of a straddle type vehicle according to the invention, and FIG. 2 is a back view showing the motorcycle of FIG. 1. In the drawings referred to in this specification, an XYZ orthogonal coordinate system composed of a front-rear direction X, a lateral direction Y and a vertical direction Z viewed from a driver of a motorcycle 1 is shown as appropriate.

The motorcycle 1 includes a vehicle body frame 2 extending in the front-rear direction X. This vehicle body frame 2 includes a head pipe 21 and a main frame 22, and the main frame 22 extends rearward from the head pipe 21. The vehicle body frame 2 supports a seat 23, on which the driver is sitting, and a tank cover 41 for covering a fuel tank storing fuel. The seat 23 and the tank cover 41 are arranged behind the head pipe 21 and above the main frame 22, and the tank cover 41 is located between the head pipe 21 and the seat 23 in the front-rear direction X.

A tandem seat 25 on which a passenger can sit is arranged behind the seat 23. A rear cover 26 is arranged behind the seat 23 and below the tandem seat 25. A lower part of the tandem seat 25 is attached to an upper part of the rear cover 26. In this way, the tandem seat 25 is supported by the rear cover 26. The rear cover 26 overlaps a rear wheel 37 in a vehicle plan view and functions as a guard against mud from the rear wheel 37.

The head pipe 21 supports a front fork 31 so as to allow the front fork 31 to rotate to the right and left. Handles 32 are attached to the upper end of the front fork 31. The front fork 31 includes right and left forkpipes 311 in a pair extended obliquely downward towards the front. A front wheel 33 is caught between the forkpipes 311 from the left-right direction Y to be rotatably supported. The front fork 31, the handles 32, and the front wheel 33 can rotate integrally about the head pipe 21. This allows a rider to control a traveling direction of the motorcycle 1 through operation on the handles 32 with both hands which are across the tank cover 41 covering the fuel tank while the rider is at the seat 23.

A headlight unit 34 is arranged ahead of the head pipe 21. The headlight unit 34 includes a headlight 341 for emitting light frontward, and a cover 342 used for attaching the headlight 341 to the front fork 31. The headlight unit 34 is rotatable together with the front fork 31. The headlight 341 illuminates a traveling direction of the motorcycle 1.

A pivot shaft 28 is mounted on the rear end of the main frame 22, and a pair of left and right swing arms 29 extend rearward from the pivot shaft 28. These swing arms 29 are mounted on the main frame 22 via a rear suspension 36 while being supported on the pivot shaft 28 swingably in the vertical direction Z about the pivot shaft 28. The pair of swing arms 29 rotatably support the rear wheel 37 while sandwiching the rear wheel 37 in the lateral direction Y by rear end parts of the swing arms 29.

An engine 42 is arranged below the main frame 22 and supported by the main frame 22. The engine 42 is a 4-stroke engine for generating power by exploding the fuel supplied from the fuel tank, and rotates the rear wheel 37 by transmitting the power to the rear wheel 37 via a secondary deceleration mechanism.

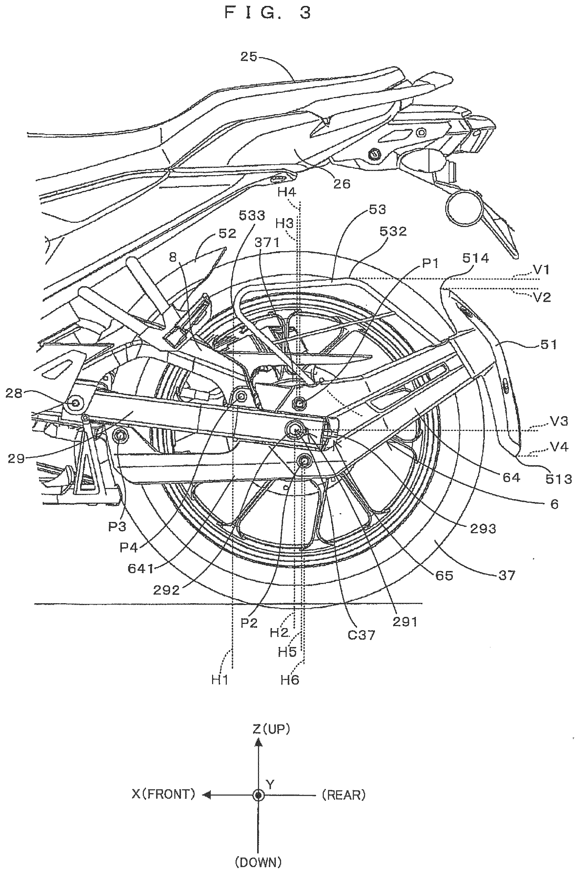

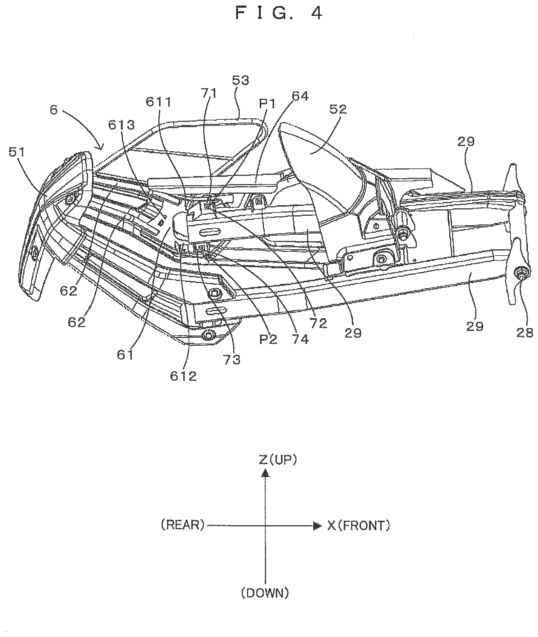

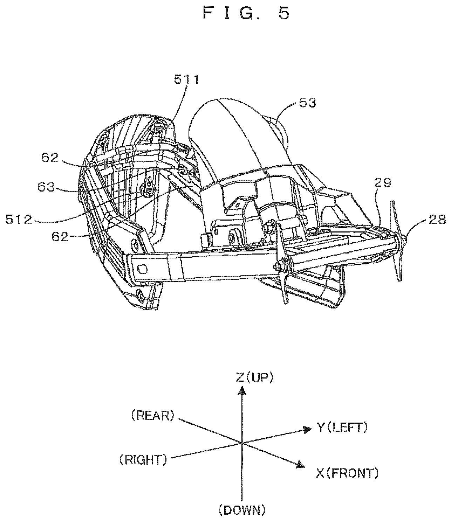

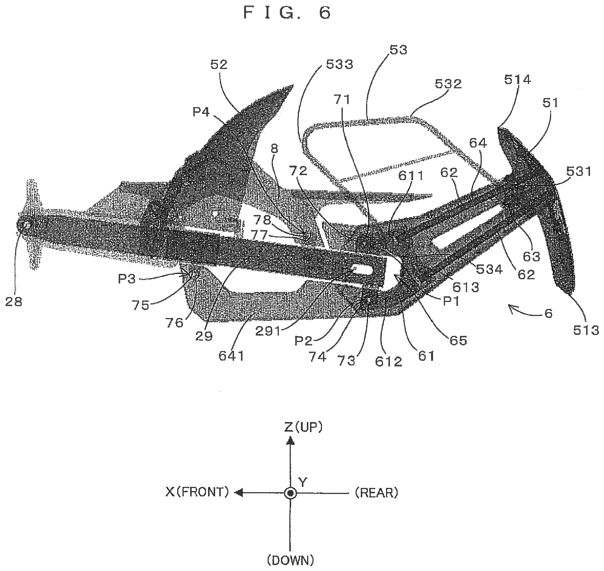

FIG. 3 is a left side view partially showing the configuration of and around the rear wheel, FIG. 4 is a perspective view partially showing the configuration around the rear wheel from above, FIG. 5 is a perspective view partially showing the configuration around the rear wheel from front, and FIG. 6 is a left side view showing the configuration around the rear wheel partially in a transparent manner.

As shown in FIG. 3 and the like, a long hole 291 formed parallel to the swing arm 29 penetrates through the rear end part of the swing arm 29 and an axle 292 is fit into the long holes 291 of the pair of left and right swing arms 29. The rear wheel 37 is rotatably supported by the axle 292. Further, a tension applying part 293 for adjusting a tension of a chain projects rearward from the rear end of the axle 292, and a user can displace the position of the axle 292 within a range of the long holes 291 by operating the tension applying part 293 using a tool such as a spanner. As a result, the tension of the chain of the secondary deceleration mechanism engaged with a sprocket 371 of the rear wheel 37 is adjusted.

A first rear fender 51 made of resin is arranged behind the axle 292 and partially covers the peripheral surface of the rear wheel 37. Further, a second rear fender 52 made of resin is arranged in front of the axle 292 and above the swing arms 29, and partially covers the peripheral surface of the rear wheel 37. These first and second rear fenders 51, 52 respectively function to keep out mud splashed from the rear wheel 37. The first and second rear fenders 51, 52 are arranged at an interval in a circumferential direction of the axle 292, and mud splashed from the rear wheel 37 in this interval is kept out by the aforementioned rear cover 26. Further, a sari guard 53 made of metal and arranged above the axle 292 faces the rear wheel 37 from left. The sari guard 53 functions to keep out mud splashed from the rear wheel 37 and restrain the clothes (sari) of a passenger sitting on the tandem seat 25 from being smeared by the splashed mud.

The first rear fender 51 is supported by a pair of left and right support arms 6 sandwiching the rear wheel 37 in the lateral direction Y. In this example, the pair of support arms 6 are integrally formed, but these may be separately formed and connected by screws or the like. The pair of support arms 6 have a bilaterally symmetrical configuration except a mechanism for supporting the sari guard 53. The left support arm 6 supporting the sari guard 53 is mainly described below.

As shown in FIGS. 4 and 6, the support arm 6 includes a support stay 61 made of metal and mounted on a rear end part of the swing arm 29 and two support rods 62 made of metal and extending rearward from the support stay 61. This support stay 61 includes an upper part 611 located above the axle 292 (long hole 291), a lower part 612 located below the axle 292 (long hole 291) and a connecting part 613 vertically connecting the upper part 611 and the lower part 612 behind the swing arm 29.

This support stay 61 is mounted on the swing arm 29 at each of a mounting location P1 above the axle 292 and a mounting location P2 below the axle 292. Note that, in a vehicle side view, a center of each of these mounting locations P1, P2 is located behind a rotation center C37 of the rear wheel 37, i.e. behind a center of the axle 292. More particularly, an upper projecting member 71 made of metal is fixed to the rear end part of the swing arm 29, for example, by welding. The upper projecting member 71 projects upward from the swing arm 29 and overlaps the mounting location P1. At the mounting location P1, the upper projecting member 71 and the upper part 611 of the support stay 61 are fastened by an upper fastening member 72 (bolt and nut) made of metal. That is, in this example, a presence range of a shaft of the bolt of the upper fastening member 72 corresponds to the mounting location P1. Further, a lower projecting member 73 made of metal is fixed to the rear end part of the swing arm 29, for example, by welding. The lower projecting member 73 projects downward from the swing arm 29 and overlaps the mounting location P2. At the mounting location P2, the lower projecting member 73 and the lower part 612 of the support stay 61 are fastened by a lower fastening member 74 made of metal. That is, in this example, a presence range of a shaft of a bolt of a lower fastening member 74 corresponds to the mounting location P2.

The front end of each of the two support rods 62 is fixed to the connecting part 613 of the support stay 61 connected to the swing arm 29 in this way. On the other hand, rear end parts of the two support rods 62 are curved inwardly in the lateral direction Y along the shape of the first rear fender 51. As shown in FIG. 5, out of the two support rods 62, the rear end part of the upper support rod 62 is mounted on the first rear fender 51 at a mounting location 511 and the rear end part of the lower support rod 62 is mounted on the first rear fender 51 at a mounting location 512 below the mounting location 511. These mounting locations 511, 512 are located above the axle 292 supporting the rear wheel 37. A lower end 513 of the first rear fender 51 supported on the support arm 6 in this way is located below the rotation center C37 of the rear wheel 37, i.e. the center of axle 292 as shown in FIG. 3.

Further, the support arm 6 also has a function of supporting the above sari guard 53. That is, as shown in FIG. 6 and the like, a rear end 531 of the sari guard 53 is fixed to the two support rods 62 by a fastening mechanism 63. This sari guard 53 extends upward toward the front from the rear end 531 located behind the mounting locations P1, P2 (further located behind the support stay 61) and reaches an upper end 532 thereof. Further, the sari guard 53 extends downward toward the front from the upper end 532 and reaches a front end 533 thereof. Furthermore, the sari guard 53 extends downward toward the rear from the front end 533 and reaches a lower end 534 thereof. The lower end 534 of the sari guard 53 is fixed to the support stay 61 by welding. Note that the front end 533 of the sari guard 53 is located in front of the front ends of the respective mounting locations P1 and P2 and the rear end 531 of the sari guard 53 is located behind the rear ends of the respective mounting locations P1 and P2. Further, the upper end 532 of the sari guard 53 is located above the upper end 514 of the first rear fender 51. In this way, the sari guard 53 is supported by the support arm 6 above the support arm 6.

Further, the support arm 6 includes a cover 64 made of resin for covering the support stay 61 and the support rods 62 mounted to each other in this way from an outer side in the lateral direction Y. This cover 64 is fastened to the support stay 61 by the upper fastening member 72 and the lower fastening member 74 at the mounting locations P1 and P2. Further, the cover 64 integrally includes a chain guard 641 extending further forward than the lower projecting member 73 below the swing arm 29. This chain guard 641 is mounted on the swing arm 29 at a mounting location P3 in front of the lower projecting member 73 and below the swing arm 29. The mounting of the chain guard 641 on the swing arm 29 is realized by a lower projecting member 75 and a lower fastening member 76 similar to the lower projecting member 73 and the lower fastening member 74 described above.

Note that, in the vehicle side view, the rear end of the swing arm 29 and the connecting part 613 of the support stay 61 face each other with a clearance defined therebetween, and the cover 64 is formed not to overlap this clearance. That is, the support arm 6 includes an opening 65 between the rear end of the swing arm 29 and the connecting part 613 of the support stay 61, and the tension applying part 293 is exposed via the opening 65 in the vehicle side view. Thus, the user can insert a tool into the tension applying part 293 via a tension opening to adjust the tension of the chain.

Further, the second rear fender 52 is supported by a pair of left and right support frames 8 sandwiching the rear wheel 37 in the lateral direction Y. The pair of support frames 8 are bilaterally symmetrically configured. In this example, the pair of support frames 8 are integrally formed, but these may be separately formed and connected by screws or the like. The support frame 8 is arranged above the swing arm 29 and mounted on the swing arm 29 at a mounting location P4 in front of the mounting location P1. The mounting of the support frame 8 on the swing arm 29 is realized by an upper projecting member 77 and an upper fastening member 78 similar to the upper projecting member 71 and the upper fastening member 72 described above. This support frame 8 extends forward from the mounting location P4 to the second rear fender 52 and the second rear fender 52 is mounted on the front end of the support frame 8.

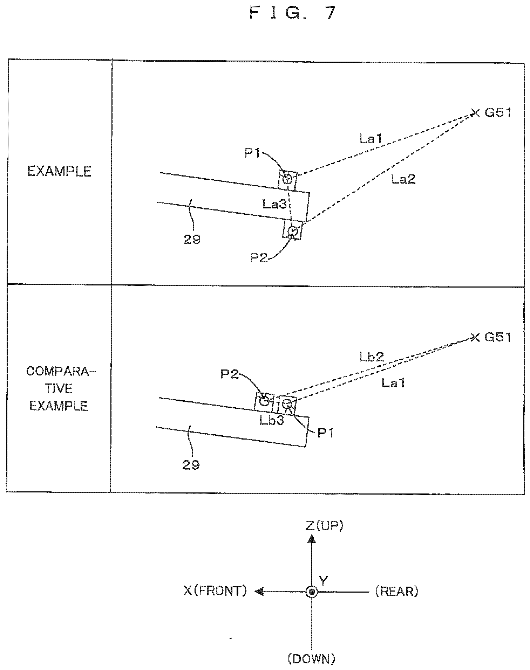

In this embodiment described above, the support arm 6 and the swing arm 29 are connected at the mounting locations P1, P2 provided above and below the axle 292 provided in the swing arm 29, the support arm 6 supporting the sari guard 53 and the first rear fender 51. This can ensure a distance between the mounting locations P1 and P2 while suppressing a distance between each of the mounting locations P1 and P2 and the first rear fender 51 as described in detail next using FIG. 7, with the result that the support arm 6 and the swing arm 29 can be mounted while a sufficient stiffness is ensured for loads by the sari guard 53 and the first rear fender 51 supported by the support arm 6.

FIG. 7 is a diagram schematically showing positional relationships of the mounting locations of the swing arm and the support arm and the first rear fender. In FIG. 7, the position of the first rear fender 51 is indicated by a center of gravity G51 of the first rear fender 51. Further, an example in which the mounting locations P1, P2 are separately arranged above and below the swing arm 29 (example of this embodiment) is shown in the field of "Example", and an example in which the arrangement of the mounting location P2 is changed from a position below the swing arm 29 to a position above the swing arm 29 as compared to Example is shown in the field of "Comparative Example".

In Example, if it is assumed that the center of gravity G51 of the first rear fender 51 is a point of effort, the mounting location P1 is a point of action, the mounting location P2 is a fulcrum and a force applied to the center of gravity G51 (i.e. weight of the first rear fender 51) is F51, a load Fa1 applied to the mounting location P1 is:

$$Fa1 = F51 \times La2/La3.$$

Here, a distance La2 is a distance between the center of gravity G51 and (the center of) the mounting location P2, and a distance La3 is a distance (inter-center distance) between the mounting locations P1 and P2. Further, if it is assumed that the mounting location P2 is a point of action and the mounting location P1 is a fulcrum, a load Fa2 applied to the mounting location P2 is:

$$Fa2 = F51 \times La1/La3.$$

Here, a distance La1 is a distance between the center of gravity G51 and (the center of) the mounting location P1.

In Comparative Example, if it is assumed that the mounting location P1 is a point of action and the mounting location P2 is a fulcrum, a load Fb1 applied to the mounting location P1 is:

$$Fb1 = F51 \times Lb2/Lb3.$$

Here, a distance Lb2 is a distance between the center of gravity G51 and (the center of) the mounting location P2, and a distance Lb3 is a distance (inter-center distance) between the mounting locations P1 and P2. Further, if it is assumed that the mounting location P2 is a point of action and the mounting location P1 is a fulcrum, a load Fb2 applied to the mounting location P2 is:

$$Fb2 = F51 \times La1/Lb3.$$

Accordingly, a difference (Fa1-Fb1) between the loads applied to the mounting location P1 in Example and Comparative Example is:

$$Fa1-Fb1 = F51 \times La2/La3 - F51 \times Lb2/Lb3$$
$$= F51 \times (La2/La3-Lb2/Lb3)$$
$$= (La2 \times Lb3-Lb2 \times La3) \times F51/(La3 \times Lb3).$$

If it is attempted to shorten the distances La1, Lb2 between the mounting locations P1, P2 and the center of gravity G51 to reduce the loads applied to the mounting locations P1, P2 while arranging the mounting location P2 above the swing arm 29 in such a manner as to avoid the mounting location P1, the mounting location P2 needs to be located in front of and near the mounting location P1. As a result,
La2 < Lb2, and
Lb3 < La3.
As a result,
Fa1 < Fb1.

That is, the load applied to the mounting location P1 can be more reduced when the mounting locations P1, P2 are arranged above and below the swing arm 29 than when the mounting locations P1, P2 are arranged above the swing arm 29.

Similarly, a difference (Fa2-Fb2) between the loads applied to the mounting location P2 in Example and Comparative Example is:

$$Fa2-Fb2 = F51 \times La1/La3 - F51 \times La1/Lb3$$
$$= F51 \times La1 \times (1/La3-1/Lb3).$$

Due to a factor similar to the one described above,
Lb3 < La3.
As a result,
Fa2 < Fb2.

That is, the load applied to the mounting location P2 can be more reduced when the mounting locations P1, P2 are arranged above and below the swing arm 29 than when the mounting locations P1, P2 are arranged above the swing arm 29.

In this way, the distance La3 between the mounting locations P1 and P2 can be ensured while the distances La1, La2 between the mounting locations P1, P2 and the first rear fender 51 are suppressed (reduced), with the result that the support arm 6 and the swing arm 29 can be mounted while a sufficient stiffness is ensured for the loads by the sari guard 53 and the first rear fender 51 supported by the support arm 6.

Further, the lower end 513 of the first rear fender 51 is located below the rotation center C37 of the rear wheel 37. Since the first rear fender 51 is arranged near a road surface in such a configuration, mud and the like splashed from the rear wheel 37 can be reliably received by the first rear fender 51. Furthermore, according to this embodiment, the support arm 6 and the swing arm 29 can be mounted while a sufficient stiffness is ensured for the load by the first rear fender 51 arranged near the road surface in this way. Thus, the first rear fender 51 can be firmly supported.

Further, the upper end 514 of the first rear fender 51 is located below the upper end 532 of the sari guard 53. By arranging the first rear fender 51 relatively low in this way, mud and the like splashed from the rear wheel 37 can be reliably received by the first rear fender 51. Furthermore, according to this embodiment, the support arm 6 and the swing arm 29 can be mounted while a sufficient stiffness is ensured for the load by the first rear fender 51 arranged relatively low in this way. Thus, the first rear fender 51 can be firmly supported.

Further, the front end 533 of the sari guard 53 is located in front of the front end of the mounting location P1 and the front end of the mounting location P2. Since a center of gravity of the sari guard 53 can be located relatively in front in such a configuration, the loads applied to the mounting locations P1, P2 from the first rear fender 51 and the sari guard 53 behind the mounting locations P1, P2 can be suppressed.

Further, in the vehicle side view, the centers of the respective mounting locations P1, P2 are located behind the rotation center C37 of the rear wheel 37. In such a configuration, the load applied to each of the mounting locations P1, P2 from the first rear fender 51 can be suppressed by suppressing the distance La1, La2 between each of the mounting locations P1, P2 and the first rear fender 51.

Further, the second rear fender 52 arranged at a distance from the first rear fender 51 in the circumferential direction of the rear wheel 37 and configured to cover a part of the peripheral surface of the rear wheel 37 is provided in front of the first rear fender 51. In the case of separately providing the second rear fender 52 and the first rear fender 51 in this way, the first rear fender 51 can be arranged near a road surface without being enlarged as compared to the case where these rear fenders are integrally configured. Furthermore, according to this embodiment, the first rear fender 51 arranged near the road surface can be firmly supported as described above.

Further, the support frame 8 for supporting the second rear fender 52 is arranged above the swing arm 29, and the upper projecting member 77 and the upper fastening member 78 connect the support frame 8 to the swing arm 29 at the mounting location P4 above the axle 292 provided in the swing arm 29 and in front of the mounting location P1. In such a configuration, the upper projecting member 77 and the upper fastening member 78 for connecting the support frame 8 supporting the second rear fender 52 and the swing arm 29 are located above the axle 292 provided in the swing arm 29. Thus, in order to arrange the two mounting locations P1, P2, where the support arm 6 and the swing arm 29 are mounted, above the swing arm 29 while avoiding interference with the upper projecting member 77 and the upper fastening member 78, these mounting locations P1, P2 need to be brought closer, whereby mounting stiffness is reduced. In contrast, according to this embodiment, since the support arm 6 and the swing arm 29 are connected at the mounting locations P1, P2 provided above and below the axle 292 provided in the swing arm 29, mounting stiffness can be ensured.

Further, at the mounting location P1, the upper projecting member 71 and the upper fastening member 72 are provided. The upper projecting member 71 is mounted on the swing arm 29, projects upward from the swing arm 29 and overlaps the mounting location P1 in the vehicle side view, and the upper fastening member 72 fastens the upper projecting member 71 and the support arm 6 at the mounting location P1. Further, at the mounting location P2, the lower projecting member 73 and the lower fastening member 74 are provided. The lower projecting member 73 is mounted on the swing arm 29, projects downward from the swing arm 29 and overlaps the mounting location P2 in the vehicle side view, and the lower fastening member 74 fastens the lower projecting member 73 and the support arm 6 at the mounting location P2. In such a configuration, by unfastening each of the upper fastening member 72 and the lower fastening member 74, the first rear fender 51, the sari guard 53 and the support arm 6 can be integrally removed, and a disassembling operation associated with the maintenance or the like of the motorcycle 1 can be easily performed.

Further, the support arm 6 includes the support stay 61 to be mounted on the swing arm 29 and the two support rods 62 extending rearward from the support stay 61. The support stay 61 includes the upper part 611 arranged above the axle 292 to overlap the mounting location P1 in the vehicle side view, the lower part 612 arranged below the axle 292 to overlap the mounting location P2 in the vehicle side view and the connecting part 613 connecting the upper part 611 and the lower part 612. The front end of each of the two support rods 62 is mounted on the connecting part 613 of the support stay 61, and the first rear fender 51 is mounted on the rear end of each of the two support rods 62. The support arm 6 is connected to the swing arm 29 at the mounting location P1 by mounting the upper part 611 of the support stay 61 and the swing arm 29 at the mounting location P1, and the support arm 6 is connected to the swing arm 29 at the mounting location P2 by mounting the lower part 612 of the support stay 61 and the swing arm 29 at the mounting location P2. As just described, the first rear fender 51 can be firmly supported by the support arm 6 including the support stay 61 and the two support rods 62 extending rearward from the support stay 61.

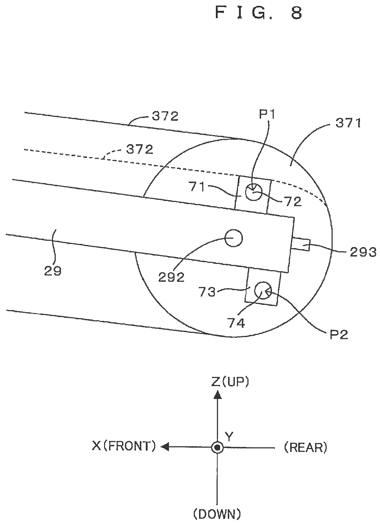

Further, the upper projecting member 71 provided at the mounting location P1 functions to suppress the fall of the chain 372 (FIG. 8) of the secondary deceleration mechanism engaged with the sprocket 371. FIG. 8 is a side view schematically showing a chain fall suppressing function of the upper projecting member. As shown in FIG. 8, the chain 372 is engaged with the sprocket 371 mounted on the rear wheel 37. The upper projecting member 71 is arranged laterally to the sprocket 371 to overlap the inside of the outer periphery of this sprocket 371. The upper projecting member 71 is in contact with the inner side of the chain 372 (chain 372 shown by broken line of FIG. 8) laterally disengaged from the sprocket 371. That is, the upper projecting member 71 (upper mounting part) can suppress the fall of the chain 372 disengaged from the sprocket 371.

Further, as shown in FIG. 3, the chain guard 641 is arranged below the chain 372 and mounted on the support arm 6. In such a configuration, the chain guard 641 can be firmly supported by the support arm 6 mounted on the swing arm 29 with high stiffness.

Further, the tension applying part 293 to which a tension adjusting operation of adjusting the tension of the chain 372 is performed is arranged behind the rear end of the swing arm 29. In the vehicle side view, the support arm 6 is provided with the opening 65 in a range overlapping the tension applying part 293, and the tool used to perform the tension adjusting operation is accessible to the tension applying part 293 via the opening 65. In such a configuration, the tool can easily access the tension applying part 293 while the interference of the tool and the support arm 6 is suppressed, and the operation of adjusting the tension of the chain 372 can be easily performed.

As described above, according the embodiment, a motorcycle 1 corresponds to an example of a "straddle type vehicle" of the invention, a vehicle body frame 2 corresponds to an example of a "vehicle body frame" of the invention, a pivot shaft 28 corresponds to an example of a "pivot" of the invention, a swing arm 29 corresponds to an example of a "swing arm" of the invention, a rear wheel 37 corresponds to an example of a "rear wheel" of the invention, a support arm 6 corresponds to an example of a "support arm" of the invention, a support stay 61 corresponds to an example of a "support stay" of the invention, an upper part 611 corresponds to an example of an "upper part" of the invention, a lower part 612 corresponds to an example of a "lower part" of the invention, a connecting part 613 corresponds to an example of a "connecting part" of the invention, an upper projecting member 71 and an upper fastening member 72 correspond to an example of an "upper mounting part" of the invention, an upper projecting member 71 corresponds to an example of an "upper projecting member" of the invention, an upper fastening member 72 corresponds to an example of an "upper fastening member" of the invention, a mounting location P1 corresponds to an example of an "upper mounting location" of the invention, an lower projecting member 73 and an lower fastening member 74 correspond to an example of an "lower mounting part" of the invention, an lower projecting member 73 corresponds to an example of an "lower projecting member" of the invention, an lower fastening member 74 corresponds to an example of an "lower fastening member" of the invention, a mounting location P2 corresponds to an example of an "lower mounting location" of the invention, a first rear fender 51 corresponds to an example of a "first rear fender" of the invention, a second rear fender 52 corresponds to an example of a "second rear fender" of the invention, a sari guard 53 corresponds to an example of a "sari guard" of the invention, a support frame 8 corresponds to an example of a "support frame" of the invention, an upper projecting member 77 and an upper fastening member 78 correspond to an example of an "front mounting part" of the invention, a mounting location P4 corresponds to an example of a "front mounting location" of the invention, a sprocket 371 corresponds to an example of a "sprocket" of the invention, a chain 372 corresponds to an example of a "chain" of the invention, a chain guard 641 corresponds to an example of a "chain guard" of the invention, a tension applying part 293 corresponds to an example of a "tension applying part" of the invention, an opening 65 corresponds to an example of an "opening" of the invention.

Further, as shown in FIG. 3, an upper end V1 (upper end 532) of the sari guard 53 corresponds to an example of an "upper end of the sari guard" of the invention, an upper end V2 (upper end 514) of the first rear fender 51 corresponds to an example of an "upper end of the first rear fender" of the invention, a center of rotation V3 (rotation center C37) of the rear wheel 37 corresponds to an example of a "rotation center of the rear wheel" of the invention and a lower end V4 of the first rear fender 51 corresponds to an example of a "lower end of the first rear fender" of the invention in the vertical direction Z. A front end H1 (front end 533) of the sari guard 53 corresponds to an example of a "front end of the sari guard" of the invention, a center of rotation H2 (rotation center C37) of the rear wheel 37 corresponds to an example of a "rotation center of the rear wheel" of the invention, a front end H3 of the mounting location P1 corresponds to an example of a "front end of the upper mounting location" of the invention, a center H4 of the mounting location P1 corresponds to an example of a "center of the upper mounting location" of the invention, a front end H5 of the mounting location P2 corresponds to an example of a "front end of the lower mounting location" of the invention and a center H6 of the mounting location P2 corresponds to an example of a "center of the lower mounting location" of the invention in the front-rear direction.

Note that the invention is not limited to the above embodiment and various changes can be made for the aforementioned embodiment without departing from the gist of the invention. For example, the mechanism for connecting the support arm 6 to the swing arm 29 at the mounting location P1 is not limited to the mechanism by the upper projecting member 71 and the upper fastening member 72 described above. That is, the swing arm 29 may be formed by casting, and this swing arm 29 and (the support stay 61 of) the support arm 6 may be fastened by a fastening member above the swing arm 29.

Similarly, the mechanism for connecting the support arm 6 to the swing arm 29 at the mounting location P2 is not limited to the mechanism by the lower projecting member 73 and the lower fastening member 74 described above. That is, the swing arm 29 may be formed by casting, and this swing arm 29 and (the support stay 61 of) the support arm 6 may be fastened by a fastening member below the swing arm 29.

Further, specific configurations of the support arms 6, the sari guard 53, the first rear fender 51, the second rear fender 52 and the like may be changed as appropriate. As a specific example of the change, the first rear fender 51, the second rear fender 52 or the cover 64 for the support arm 6 may be made of another material such as metal without limitation to resin.

Although the invention has been described with reference to specific embodiments, this description is not meant to be construed in a limiting sense. Various modifications of the disclosed embodiment, as well as other embodiments of the present invention, will become apparent to persons skilled in the art upon reference to the description of the invention. It is therefore contemplated that the appended claims will cover any such modifications or embodiments as fall within their scope.


**Claims**

1. A straddle type vehicle (1), comprising:

   a vehicle body frame (2);
   a swing arm (29) supported on the vehicle body frame (2) swingably in a vertical direction about a pivot (28) of the vehicle body frame (2);
   a rear wheel (37) rotatably supported on an axle (292) provided in the swing arm (29);
   a support arm (6) extending rearward from the swing arm (29);
   an upper mounting part (71, 72) configured to connect the support arm (6) to the swing arm (29) at an upper mounting location (P1) arranged above the axle (292) provided in the swing arm (29);
   a lower mounting part (73, 74) configured to connect the support arm (6) to the swing arm (29) at a lower mounting location (P2) arranged below the axle (292) provided in the swing arm (29);
   a first rear fender (51) mounted on a rear end of the support arm (6) and configured to cover a part of a peripheral surface of the rear wheel (37); and
   a sari guard (53) arranged above the support arm (6) and laterally to the rear wheel (37) in a vehicle width direction (Y) and mounted on the support arm (6), wherein
   the upper mounting part (71, 72) includes an upper projecting member (71) mounted on the swing arm (29), projecting upward from the swing arm (29) and overlapping the upper mounting location (P1) in a vehicle side view and an upper fastening member (72) configured to fasten the upper projecting member (71) and the support arm (6) at the upper mounting location (P1); and
   the lower mounting part (73, 74) includes a lower projecting member (73) mounted on the swing arm (29), projecting downward from the swing arm (29) and overlapping the lower mounting location (P2) in the vehicle side view and a lower fastening member (74) configured to fasten the lower projecting member (73) and the support arm (6) at the lower mounting location (P2).

2. The straddle type vehicle (1) according to claim 1, wherein a lower end (V4) of the first rear fender (51) is located below a rotation center (V3) of the rear wheel (37) in a vehicle side view.

3. The straddle type vehicle (1) according to claim 1 or 2, wherein an upper end (V2) of the first rear fender (51) is located below an upper end (V1) of the sari guard (53) in a vehicle side view.

4. The straddle type vehicle (1) according to any one of claims 1 to 3, wherein a front end (H1) of the sari guard (53) is located in front of a front end (H3) of the upper mounting location (P1) and a front end (H5) of the lower mounting location (P2) in a vehicle side view.

5. The straddle type vehicle (1) according to any one of claims 1 to 4, wherein a center (H4) of the upper mounting location (P1) and a center (H6) of the lower mounting location (P2) are located behind a rotation center (H2) of the rear wheel (37) in a vehicle side view.

6. The straddle type vehicle (1) according to any one of claims 1 to 5, further comprising a second rear fender (52) arranged in front of the first rear fender (51) at a distance from the first rear fender (51) in a circumferential direction of the rear wheel (37) and configured to cover a part of the peripheral surface of the rear wheel (37).

7. The straddle type vehicle (1) according to claim 6, further comprising:

   a supporting member (8) arranged above the swing arm (29) and configured to support the second rear fender (52); and
   a front mounting part (77, 78) configured to connect the supporting member (8) to the swing arm (29) at a front mounting location (P4) above the axle (292) provided in the swing arm (29) and in front of the upper mounting location (P1).

8. The straddle type vehicle (1) according to any one of claims 1 to 7, wherein:

   the support arm (6) includes a support stay (61) to be mounted on the swing arm (29) and two support rods (62) extending rearward from the support stay (61);
   the support stay (61) includes an upper part (611) arranged above the axle (292) provided in the swing arm (29) to overlap the upper mounting location (P1) in a vehicle side view, a lower part (612) arranged below the axle (292) provided in the swing arm (29) to overlap the lower mounting location (P2) in the vehicle side view, and a connecting part (613) connecting the upper part (611) and the lower part (612);
   a front end of each of the two support rods (62) is mounted on the connecting part (613) of the support stay (61);
   the first rear fender (52) is mounted on a rear end of each of the two support rods (62);
   the upper mounting part (71, 72) connects the support arm (6) to the swing arm (29) at the upper mounting location (P1) by mounting the upper part (611) of the support stay (61) and the swing arm (29) at the upper mounting location (P1); and
   the lower mounting part (73, 74) connects the support arm (6) to the swing arm (29) at the lower mounting location (P2) by mounting the lower part (612) of the support stay (61) and the swing arm (29) at the lower mounting location (P2).

9. The straddle type vehicle (1) according to any one of claims 1 to 8, further comprising
   a sprocket (371) mounted on the rear wheel (37); and
   a chain (372) engaged with the sprocket (371).

10. The straddle type vehicle (1) according to claim 9, wherein the upper mounting part (71, 72) overlaps the sprocket (371) on a side inward of an outer periphery of the sprocket (371) and is configured to contact an inner side of the chain (372) from below when the chain (372) is disengaged from the sprocket (371).

11. The straddle type vehicle (1) according to claim 9 or 10, further comprising a chain guard (641) arranged below the chain (372), wherein:
    the chain guard (641) is mounted on the support arm (6).

12. The straddle type vehicle (1) according to any one of claims 9 to 11, further comprising a tension applying part (293) arranged behind a rear end of the swing arm (29) and configured to adjust a tension of the chain (372), wherein:
    the support arm (6) is provided with an opening (65) formed in a range overlapping the tension applying part (293) in a vehicle side view and a tool is insertable into the tension applying part (293) through the opening (65).

**Patentansprüche**

1. Ein Grätschsitz-Typ-Fahrzeug (1), umfassend:

   einen Fahrzeugkörperrahmen (2);
   einen Schwingarm (29), der an dem Fahrzeugkörperrahmen (2) schwingbar in einer vertikalen Richtung um einen Drehpunkt (28) des Fahrzeugkörperrahmens (2) gelagert ist;
   ein Hinterrad (37), das drehbar an einer Achse (292), die in dem Schwingarm (29) vorgesehen ist, gelagert ist;

einen Stützarm (6), der sich rückwärts von dem Schwingarm (29) erstreckt;

einen oberen Montageteil (71, 72), der konfiguriert ist, den Stützarm (6) mit dem Schwingarm (29) an einer oberen Montagestelle (P1), die über der Achse (292), die in dem Schwingarm (29) vorgesehen ist, angeordnet ist, zu verbinden;

einen unteren Montageteil (73, 74), der konfiguriert ist, den Stützarm (6) mit dem Schwingarm (29) an einer unteren Montagestelle (P2), die unter der Achse (292), die in dem Schwingarm (29) vorgesehen ist, angeordnet ist, zu verbinden;

einen ersten hinteren Fender (51), der an einem hinteren Ende des Stützarms (6) montiert ist und konfiguriert ist, einen Teil einer Peripherieoberfläche des Hinterrades (37) abzudecken; und

einen Sari-Schutz (53), der über dem Stützarm (6) und lateral zu dem Hinterrad (37) in einer Fahrzeugbreitenrichtung (Y) angeordnet ist und an dem Stützarm (6) montiert ist, wobei

der obere Montageteil (71, 72) ein oberes Vorsprungselement (71), das an dem Schwingarm (29) montiert ist, das aufwärts von dem Schwingarm (29) vorspringt und die obere Montagestelle (P1) in einer Fahrzeugseitenansicht überlappt, und ein oberes Befestigungselement (72) beinhaltet, das konfiguriert ist, das obere Vorsprungselement (71) und den Stützarm (6) an der oberen Montagestelle (P1) zu befestigen; und

der untere Montageteil (73, 74) ein unteres Vorsprungselement (73), das an dem Schwingarm (29) montiert ist, das abwärts von dem Schwingarm (29) vorspringt und die untere Montagestelle (P2) in der Fahrzeugseitenansicht überlappt, und ein unteres Befestigungselement (74) beinhaltet, das konfiguriert ist, das untere Vorsprungselement (73) und den Stützarm (6) an der unteren Montagestelle (P2) zu befestigen.

2. Das Grätschsitz-Typ-Fahrzeug (1) nach Anspruch 1, wobei ein unteres Ende (V4) des ersten hinteren Fenders (51) unter einer Drehmitte (V3) des Hinterrades (37) in einer Fahrzeugseitenansicht gelegen ist.

3. Das Grätschsitz-Typ-Fahrzeug (1) nach Anspruch 1 oder 2, wobei ein oberes Ende (V2) des ersten hinteren Fenders (51) unter einem oberen Ende (V1) des Sari-Schutzes (53) in einer Fahrzeugseitenansicht gelegen ist.

4. Das Grätschsitz-Typ-Fahrzeug (1) nach irgendeinem der Ansprüche 1 bis 3, wobei ein vorderes Ende (H1) des Sari-Schutzes (53) vor einem vorderen Ende (H3) der oberen Montagestelle (P1) und einem vorderen Ende (H5) der unteren Montagestelle (P2) in einer Fahrzeugseitenansicht gelegen ist.

5. Das Grätschsitz-Typ-Fahrzeug (1) nach irgendeinem der Ansprüche 1 bis 4, wobei eine Mitte (H4) der oberen Montagestelle (P1) und eine Mitte (H6) der unteren Montagestelle (P2) hinter einer Drehmitte (H2) des Hinterrades (37) in einer Fahrzeugseitenansicht gelegen sind.

6. Das Grätschsitz-Typ-Fahrzeug (1) nach irgendeinem der Ansprüche 1 bis 5, weiterhin umfassend einen zweiten hinteren Fender (52), der vor dem ersten hinteren Fender (51) in einer Distanz von dem ersten hinteren Fender (51) in einer Umfangsrichtung des Hinterrades (37) angeordnet ist und konfiguriert ist, einen Teil der Peripherieoberfläche des Hinterrades (37) abzudecken.

7. Das Grätschsitz-Typ-Fahrzeug (1) nach Anspruch 6, weiterhin umfassend:

ein Stützelement (8), das über dem Schwingarm (29) angeordnet ist und konfiguriert ist, den zweiten hinteren Fender (52) zu stützen; und

einen vorderen Montageteil (77, 78), der konfiguriert ist, das Stützelement (8) mit dem Schwingarm (29) an einer vorderen Montagestelle (P4) über der Achse (292), die in dem Schwingarm (29) vorgesehen ist, und vor der oberen Montagestelle (P1) zu verbinden.

8. Das Grätschsitz-Typ-Fahrzeug (1) nach irgendeinem der Ansprüche 1 bis 7, wobei:

der Stützarm (6) eine Stützstrebe (61), die an dem Schwingarm (29) zu montieren ist und zwei Stützstäbe (62) beinhaltet, die sich rückwärts von der Stützstrebe (61) erstrecken;

die Stützstrebe (61) einen oberen Teil (611), der über der Achse (292) angeordnet ist, die in dem Schwingarm (29) vorgesehen ist, um die obere Montagestelle (P1) in einer Fahrzeugseitenansicht zu überlappen, einen unteren Teil (612), der unter der Achse (292) angeordnet ist, die in dem Schwingarm (29) vorgesehen ist, um die untere Montagestelle (P2) in der Fahrzeugseitenansicht zu überlappen, und einen Verbindungsteil (613) beinhaltet, der den oberen Teil (611) und den unteren Teil (612) verbindet;

ein vorderes Ende von jedem der zwei Stützstäbe (62) an dem Verbindungsteil (613) der Stützstrebe (61) montiert ist;

der erste hintere Fender (52) an einem hinteren Ende von jedem der zwei Stützstäbe (62) montiert ist;
der obere Montageteil (71, 72) den Stützarm (6) mit dem Schwingarm (29) an der oberen Montagestelle (P1) durch Montieren des oberen Teils (611) der Stützstrebe (61) und des Schwingarms (29) an der oberen Montagestelle (P1) verbindet; und
der untere Montageteil (73, 74) den Stützarm (6) mit dem Schwingarm (29) an der unteren Montagestelle (P2) durch Montieren des unteren Teils (612) der Stützstrebe (61) und des Schwingarms (29) an der unteren Montagestelle (P2) verbindet.

9. Das Grätschsitz-Typ-Fahrzeug (1) nach irgendeinem der Ansprüche 1 bis 8, weiterhin umfassend
ein Ritzel (371), das an dem Hinterrad (37) montiert ist; und
eine Kette (372), die mit dem Ritzel (371) in Eingriff ist.

10. Das Grätschsitz-Typ-Fahrzeug (1) nach Anspruch 9, wobei der obere Montageteil (71, 72) das Ritzel (371) auf einer Seite innerhalb einer äußeren Peripherie des Ritzels (371) überlappt und konfiguriert ist, eine innere Seite der Kette (372) von unterhalb zu kontaktieren, wenn die Kette (372) von dem Ritzel (371) gelöst ist.

11. Das Grätschsitz-Typ-Fahrzeug (1) nach Anspruch 9 oder 10, weiterhin umfassend einen Kettenschutz (641), der unter der Kette (372) angeordnet ist, wobei:
der Kettenschutz (641) an dem Stützarm (6) montiert ist.

12. Das Grätschsitz-Typ-Fahrzeug (1) nach irgendeinem der Ansprüche 9 bis 11, weiterhin umfassend einen Spannungsaufbringungsteil (293), der hinter einem hinteren Ende des Schwingarms (29) angeordnet ist und konfiguriert ist, eine Spannung der Kette (372) einzustellen, wobei:
der Stützarm (6) mit einer Öffnung (65) versehen ist, die in einem Bereich ausgebildet ist, der den Spannungsaufbringungsteil (293) in einer Fahrzeugseitenansicht überlappt, und ein Werkzeug in den Spannungsaufbringungsteil (293) durch die Öffnung (65) einsetzbar ist.

## Revendications

1. Véhicule de type à selle (1), comprenant :

   un châssis de carrosserie de véhicule (2) ;
   un bras oscillant (29) supporté sur le châssis de carrosserie de véhicule (2) de manière pivotante dans une direction verticale autour d'un pivot (28) du châssis de carrosserie de véhicule (2) ;
   une roue arrière (37) supportée de manière rotative sur un essieu (292) agencé dans le bras oscillant (29) ;
   un bras de support (6) s'étendant vers l'arrière depuis le bras oscillant (29) ;
   une partie de montage supérieure (71, 72) configurée pour connecter le bras de support (6) au bras oscillant (29) au niveau d'un emplacement de montage supérieur (P1) disposé au-dessus de l'essieu (292) agencé dans le bras oscillant (29) ;
   une partie de montage inférieure (73, 74) configurée pour connecter le bras de support (6) au bras oscillant (29) au niveau d'un emplacement de montage inférieur (P2) disposé sous l'essieu (292) agencé dans le bras oscillant (29) ;
   un premier garde-boue arrière (51) monté sur une extrémité arrière du bras de support (6) et configuré pour couvrir une partie d'une surface périphérique de la roue arrière (37) ; et
   une protection sari (53) disposée au-dessus du bras de support (6) et latéralement vis-à-vis de la roue arrière (37) dans une direction de largeur de véhicule (Y) et montée sur le bras de support (6), dans lequel
   la partie de montage supérieure (71, 72) comprend un élément en saillie supérieur (71) monté sur le bras oscillant (29), faisant saillie vers le haut depuis le bras oscillant (29) et chevauchant l'emplacement de montage supérieur (P1) sur une vue latérale du véhicule et un élément de fixation supérieur (72) configuré pour fixer l'élément en saillie supérieur (71) et le bras de support (6) au niveau de l'emplacement de montage supérieur (P1) ; et
   la partie de montage inférieure (73, 74) comprend un élément en saillie inférieur (73) monté sur le bras oscillant (29), faisant saillie vers le bas depuis le bras oscillant (29) et chevauchant l'emplacement de montage inférieur (P2) sur la vue latérale du véhicule et un élément de fixation inférieur (74) configuré pour fixer l'élément en saillie inférieur (73) et le bras de support (6) au niveau de l'emplacement de montage inférieur (P2).

2. Véhicule de type à selle (1) selon la revendication 1, dans lequel une extrémité inférieure (V4) du premier garde-boue arrière (51) est située en dessous d'un centre de rotation (V3) de la roue arrière (37) sur une vue latérale du véhicule.

3. Véhicule de type à selle (1) selon la revendication 1 ou 2, dans lequel une extrémité supérieure (V2) du premier garde-boue arrière (51) est située en dessous d'une extrémité supérieure (V1) de la protection sari (53) sur une vue latérale du véhicule.

4. Véhicule de type à selle (1) selon l'une quelconque des revendications 1 à 3, dans lequel une extrémité avant (H1) de la protection sari (53) est située devant une extrémité avant (H3) de l'emplacement de montage supérieur (P1) et une extrémité avant (H5) de l'emplacement de montage inférieur (P2) sur une vue latérale du véhicule.

5. Véhicule de type à selle (1) selon l'une quelconque des revendications 1 à 4, dans lequel un centre (H4) de l'emplacement de montage supérieur (P1) et un centre (H6) de l'emplacement de montage inférieur (P2) sont situés derrière un centre de rotation (H2) de la roue arrière (37) sur une vue latérale du véhicule.

6. Véhicule de type à selle (1) selon l'une quelconque des revendications 1 à 5, comprenant en outre un second garde-boue arrière (52) agencé devant le premier garde-boue arrière (51) à une distance du premier garde-boue arrière (51) dans une direction circonférentielle de la roue arrière (37) et configuré pour recouvrir une partie de la surface périphérique de la roue arrière (37).

7. Véhicule de type à selle (1) selon la revendication 6, comprenant en outre :

   un élément de support (8) disposé au-dessus du bras oscillant (29) et configuré pour supporter le second garde-boue arrière (52) ; et
   une partie de montage avant (77, 78) configurée pour connecter l'élément de support (8) au bras oscillant (29) au niveau d'un emplacement de montage avant (P4) au-dessus de l'essieu (292) agencé dans le bras oscillant (29) et devant l'emplacement de montage supérieur (P1).

8. Véhicule de type à selle (1) selon l'une quelconque des revendications 1 à 7, dans lequel :

   le bras de support (6) comprend un étai de support (61) à monter sur le bras oscillant (29) et deux tiges de support (62) s'étendant vers l'arrière depuis l'étai de support (61) ;
   l'étai de support (61) comprend une partie supérieure (611) disposée au-dessus de l'essieu (292) agencé dans le bras oscillant (29) pour chevaucher l'emplacement de montage supérieur (P1) sur une vue latérale du véhicule, une partie inférieure (612) disposée sous l'essieu (292) agencé dans le bras oscillant (29) pour chevaucher l'emplacement de montage inférieur (P2) sur la vue latérale du véhicule, et une partie de connexion (613) connectant la partie supérieure (611) et la partie inférieure (612) ;
   une extrémité avant de chacune des deux tiges de support (62) est montée sur la partie de connexion (613) de l'étai de support (61) ;
   le premier garde-boue arrière (52) est monté sur une extrémité arrière de chacune des deux tiges de support (62) ;
   la partie de montage supérieure (71, 72) connecte le bras de support (6) au bras oscillant (29) au niveau de l'emplacement de montage supérieur (P1) en montant la partie supérieure (611) de l'étai de support (61) et le bras oscillant (29) au niveau de l'emplacement de montage supérieur (P1) ; et
   la partie de montage inférieure (73, 74) connecte le bras de support (6) au bras oscillant (29) au niveau de l'emplacement de montage inférieur (P2) en montant la partie inférieure (612) de l'étai de support (61) et le bras oscillant (29) au niveau de l'emplacement de montage inférieur (P2).

9. Véhicule de type à selle (1) selon l'une quelconque des revendications 1 à 8, comprenant en outre
   un pignon (371) monté sur la roue arrière (37) ; et
   une chaîne (372) en prise avec le pignon (371).

10. Véhicule de type à selle (1) selon la revendication 9, dans lequel la partie de montage supérieure (71, 72) chevauche le pignon (371) sur un côté vers l'intérieur d'une périphérie extérieure du pignon (371) et est configurée pour entrer en contact avec un côté intérieur de la chaîne (372) par le dessous lorsque la chaîne (372) est libérée du pignon (371).

11. Véhicule de type à selle (1) selon la revendication 9 ou 10, comprenant en outre une protection de chaîne (641) disposée sous la chaîne (372), dans lequel :
   la protection de chaîne (641) est montée sur le bras de support (6).

**12.** Véhicule de type à selle (1) selon l'une quelconque des revendications 9 à 11, comprenant en outre une partie d'application de tension (293) disposée derrière une extrémité arrière du bras oscillant (29) et configurée pour ajuster une tension de la chaîne (372), dans lequel :

le bras de support (6) est muni d'une ouverture (65) formée dans une plage chevauchant la partie d'application de tension (293) sur une vue latérale du véhicule et un outil peut être inséré dans la partie d'application de tension (293) à travers l'ouverture (65).

F I G. 1

FIG. 2

F I G .  3

F I G. 4

Z(UP)

(REAR) ——————→ X(FRONT)

(DOWN)

# F I G. 5

Z(UP)

(REAR)

Y(LEFT)

(RIGHT)

X(FRONT)

(DOWN)

FIG. 6

# FIG. 7

| | |
|---|---|
| EXAMPLE | P1 ╲ ⊙ La1 ✕ G51<br>La3 ╎ La2<br>29 ⊙<br>P2 |
| COMPARA-<br>TIVE<br>EXAMPLE | P2 ╲ Lb2 ✕ G51<br>⊙⊙ La1<br>Lb3 P1<br>29 |

Z(UP)

X(FRONT) ◄── ⊙ Y ── (REAR)

(DOWN)

F I G. 8

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2018234935 A1

- EP 2433855 A2